# EUROPÄISCHE PATENTSCHRIFT

(11) **EP 0 499 856 B1**
(45) Veröffentlichungstag und Bekanntmachung des Hinweises auf die Patenterteilung: **26.07.1995**
(21) Anmeldenummer: 92101539.2
(22) Anmeldetag: 30.01.1992
(51) Int. Cl.: A44B 11/25

(54) **Betätigungseinrichtung für ein Gurtschloss in einem Sicherheitssystem**
Belt fastener arrangement for a safety belt system
Dispositif de commande d'une boucle de ceinture dans un système de sécurité

(30) Priorität: 20.02.1991 DE 9102006 U
(43) Veröffentlichungstag der Anmeldung: 26.08.1992
(73) Patentinhaber: TRW Occupant Restraint Systems GmbH, 73553 Alfdorf (DE)
(72) Erfinder: Mödinger, Thomas, W-7077 Vordersteinenberg (DE); Gölz, Ulrich, W-7071 Schechingen (DE)
(74) Vertreter: Degwert, Hartmut, Dipl.-Phys.

(56) Entgegenhaltungen:
- DE-A- 3 341 568
- DE-A- 3 936 306
- DE-A- 4 006 020
- GB-A- 2 238 077
- US-A- 4 742 886

## Beschreibung

Die Erfindung betrifft eine Betätigungseinrichtung an einem Gurtschloß eines in einem Fahrzeug Vorgesehenen Sicherheitsgurtsystems, mit einem Betätigungselement, das an einem Auslöseteil des Gurtschlosses angreift, wobei das Betätigungselement an einer ortsfesten Stelle im Fahrzeug angeordnet und über eine Kraftschlüssige Verbindung, die eine Relativbewegung zwischen Gurtschloß und Betätigungselement zuläßt, an das Auslöseteil angeschlossen ist. Eine derartige Betätigungseinrichtung ist aus DE-A-3 341 568 bekannt.

Wenn ein Gurtstraffer im Falle einer Fahrzeugkollision das Gurtschloß zum Fahrzeugboden hin Verlagert, befindet sich das Betätigungselement des Gurtschlosses nach erfolgter Gurtstraffung in einer Position, die von der üblichen Gebrauchsstellung abweicht. Wenn der Fahrzeuginsasse nach einer Fahrzeugkollision, möglicherweise in einer Notsituation, nach dem Betätigungselement des Gurtschlosses tastet, so findet er dieses nicht in der gewohnten Stellung vor. Auch die Befreiung eines hilflosen Fahrzeuginsassen nach einer Fahrzeugkollision aus dem beschädigten Fahrzeug wird erschwert, wenn die Helfer das Betätigungselement des Gurtschlosses nicht in einer im voraus bekannten Stellung vorfinden.

Bei dem aus der DE-A-33 41 568 bekannten Sicherheitsgurtschloß mit automatischer Entriegelungsvorrichtung wirkt ein innerhalb oder unterhalb des Sitzes angeordneter Stellmotor oder Hubmagnet auf einen Bowdenzug, der am anderen Ende mit einem im Schloßgehäuse angeordneten Mitnehmer Verbunden ist, über den eine ebenfalls im Schloßgehäuse untergebrachte Druck-/Schiebetaste betätigbar ist. Der Mitnehmer kann auch direkt auf den Schloßriegel oder auf die Schloßverriegelung absichernde Hilfselemente einwirken. Der Stellmotor bzw. Hubmagnet wird über einen Sensor und ein elektronisches Verzögerungselement angesteuert. Dieses bekannte Schloß ist über einen Schloßhalter fest am betreffenden Sitz oder an der Karosserie befestigt. Ein Gurtstraffer ist nicht vor gesehen.

Ein Vergleichbares Sicherheitsgurtschloß ist auch aus der US-A-4 742 886 bekannt. In diesem Fall wird das Schloß mit dem Öffnen einer Fahrzeugtür automatisch entriegelt.

Der Erfindung liegt die Aufgabe zugrunde, eine Betätigungseinrichtung der im Oberbegriff des Anspruchs 1 bzw. 5 angegebenen Art zu schaffen, das problemlos insbesondere auch in Verbindung mit einem Gurtschloß mit zugeordnetem Gurtstraffer verwendbar ist.

Diese Aufgabe wird nach der Erfindung durch die im Kennzeichen des Anspruchs 1 bzw. 5 angegebenen Merkmale gelöst.

Durch die Erfindung wird eine Betätigungseinrichtung für ein Gurtschloß in einem Sicherheitsgurtsystem für Fahrzeuge geschaffen, bei welchem das Betätigungselement des Gurtschlosses vor und nach Aktivierung eines Gurtstraffers unverändert dieselbe Stellung einnimmt. Hierzu ist Vorgesehen, daß das Betätigungselement an einer ortsfesten Stelle im Fahrzeug angeordnet und über eine kraftschlüssige Verbindung, die eine Relativbewegung zwischen Gurtschloß und Betätigungselement zuläßt, an das Auslöseteil des Gurtschlosses angeschlossen ist.

Gemäß einem ersten Lösungsvorschlag ist die kraftschlüssige Verbindung durch einen Seilzug gebildet. Gemäß einer Ausführungsform dieses Lösungsweges ist der Seilzug durch ein über Umlenkelemente geführtes, in einer geschlossenen Schlaufe gespannt gehaltenes Zugseil gebildet, an dessen einem Ende das Auslöseteil angeschlossen und dessen anderes Ende mit dem Gehäuse des Gurtschlosses oder einem starr mit diesem verbundenen Teil verbunden ist, so daß der mit dem Auslöseteil verbundene Abschnitt des Zugseils bei Aktivierung des Gurtstraffers der Bewegung des Auslöseteils gleichsinnig folgt; das Betätigungselement greift an einem zwischen zwei Umlenkelementen gespannt gehaltenen Abschnitt des Zugseils im Sinne einer Schlaufenbildung zwischen diesen Umlenkelementen an.

Gemäß einem zweiten Lösungsweg umfaßt die kraftschlüssige Verbindung eine Bewegungswandlereinrichtung, die den Betätigungshub des Betätigungselements in eine kombinierte Schub- und Querbewegung eines Übertragungselements umsetzt, das bei unbetätigtem Betätigungselement von dem Auslöseteil des Gurtschlosses entkoppelt ist und durch die Querbewegung des Übertragungselements bei betätigtem Betätigungselement mit diesem Auslöseteil gekoppelt ist.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1, 2 und 3: eine Ausführungsform einer Betätigungseinrichtung nach einem ersten Lösungsvorschlag in verschiedenen Betriebszuständen; und
- Fig. 4 bis 7: eine Ausführungsform einer Betätigungseinrichtung nach einem zweiten Lösungsvorschlag in verschiedenen Betriebsstellungen.

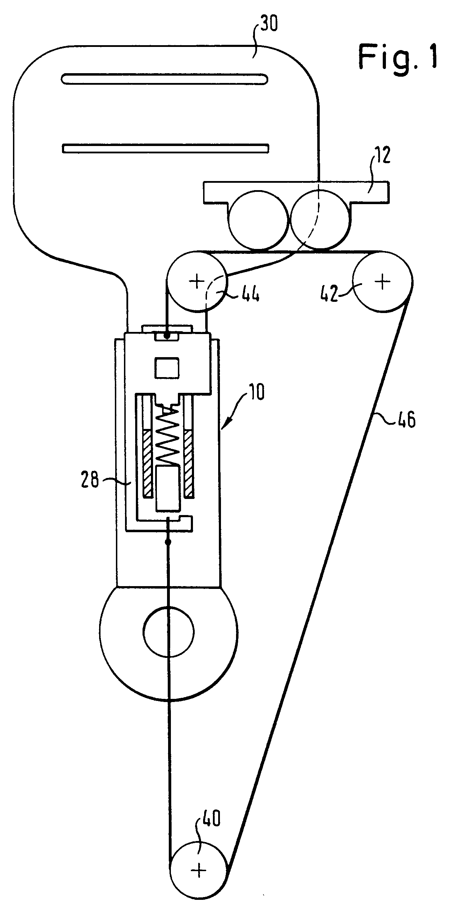

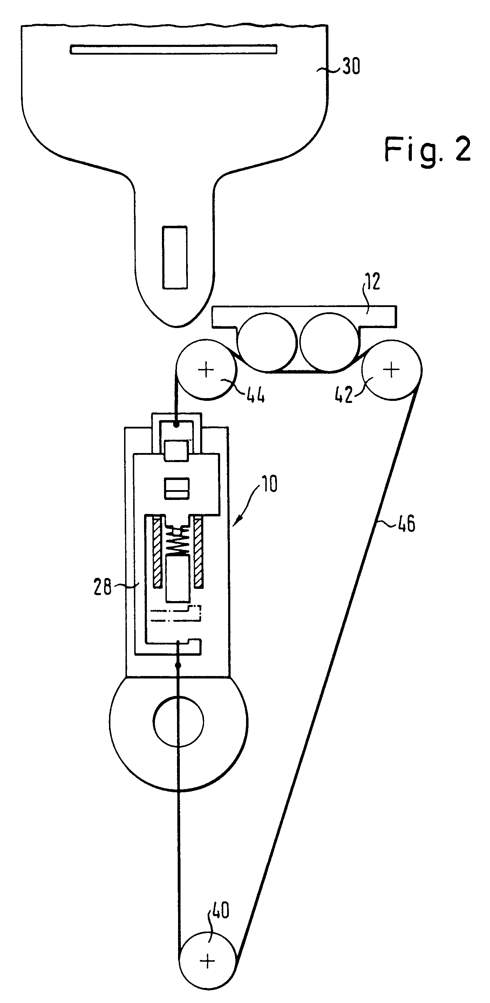

Bei der in Fig. 1 gezeigten Ausführungsform wird der auf das Betätigungselement in Form einer Drucktaste 12 ausgeübte Druck über einen Seilzug auf ein Auslöseteil 28 des Gurtschlosses 10 übertragen. Dieser Seilzug besteht aus einem gespannt gehaltenen, über drei Umlenkrollen 40, 42, 44 geführten Zugseil 46, dessen eines Ende am Gehäuse des Gurtschlosses 10 und dessen anderes Ende am Auslöseteil 28 angeschlossen ist. Das Betätigungselement 12 wirkt auf den Seilabschnitt zwischen den Umlenkrollen 42, 44 ein, indem es diesen zu einer Schlaufe verformt. Dieser Zustand ist in Fig. 2 dargestellt. Durch die Schlaufenbildung bei niedergedrücktem Betätigungselement 12 werden die übrigen Abschnitte des Zugseils 46 entsprechend verkürzt, so daß ein Zug auf das Auslöseteil 28 relativ zum Gehäuse des Gurtschlosses 10 ausgeübt wird. Durch den so auf das Auslöseteil 28 übertragenen Öffnungshub wird die Steckzunge 30 freigegeben.

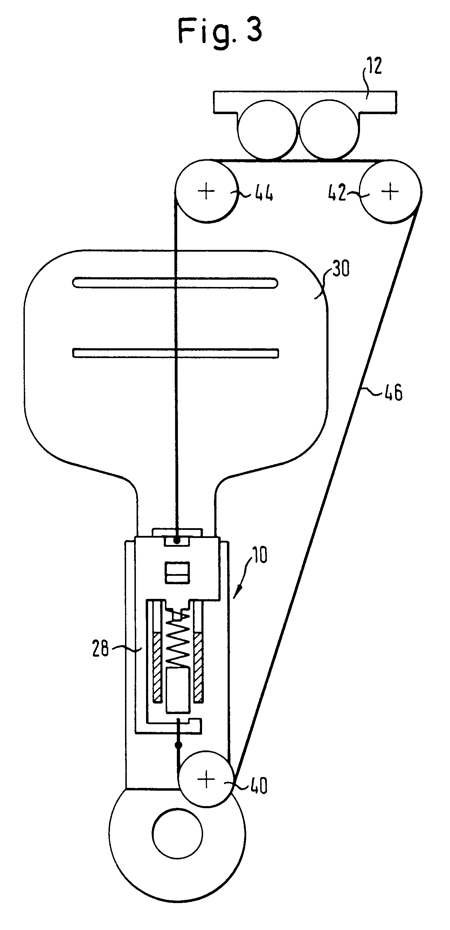

Die Figuren 1 und 2 zeigen das Schloß 10 in seiner normalen Ruhestellung; bei Aktivierung des (nicht gezeigten) Gurtstraffers wird das Gurtschloß 10 in Richtung zum Fahrzeugboden verlagert. Dieser Zustand ist in Fig. 3 dargestellt. Das Zugseil 46 folgt dieser Verlagerung, indem es auf den Umlenkrollen 40, 42 und 44 abrollt. Eine Betätigung des Gurtschlosses ist weiterhin unverändert dadurch möglich, daß der zwischen den Umlenkrollen 42, 44 gespannt gehaltene Seilabschnitt unter Bildung einer Schlaufe durch das Betätigungselement 12 niedergedrückt wird.

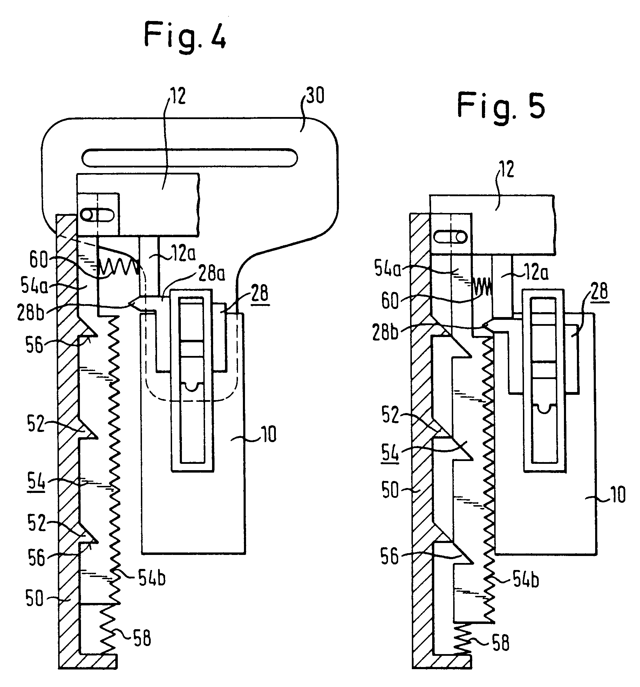

Bei der in den Figuren 4 bis 7 gezeigten Ausführungsform ist die kraftschlüssige Verbindung zwischen dem Betätigungselement 12, das wiederum als Drucktaste ausgebildet ist, und dem Auslöseteil 28 über eine Bewegungswandlereinrichtung hergestellt, die den Betätigungshub des Betätigungselements 12 in eine kombinierte Schub- und Querbewegung umsetzt. Diese Bewegungswandlereinrichtung umfaßt eine im Querschnitt C-förmige, parallel zur Verlagerungsrichtung des Gurtschlosses 10 im Fahrzeug fest eingebaute Führungsschiene 50. Diese Führungsschiene 50 ist an ihrer inneren Bodenfläche mit mehreren in Längsrichtung voneinander beabstandeten Rampenelementen 52 versehen. Zwischen den Schenkeln der Führungsschiene 50 ist eine Zahnleiste 54 längsverschiebbar geführt. Die Zahnleiste 54 ist mit Ausnehmungen 56 versehen, die komplementär zu den Rampenelementen 52 sind. Die Zahnleiste 54 ist an ihrem dem Betätigungselement 12 benachbarten Ende mit einem Betätigungsarm 54a versehen, der mit dem Betätigungselement 12 über eine Stift/Langloch-Verbindung gekoppelt ist, die eine Bewegung der Zahnleiste 54 quer zu ihrer Längsrichtung und parallel zu den Schenkeln der Führungsschiene 50 zuläßt, in Längsrichtung jedoch eine kraftschlüssige Verbindung zwischen Betätigungselement und Zahnleiste 54 herstellt. Die Zahnleiste 54 wird durch eine Druckfeder 58 in Richtung zu dem Betätigungselement 12 hin und gleichzeitig über eine Druckfeder 60 gegen den Boden der Führungsschiene 50 vorbelastet. Auf ihrer dem Auslöseteil 28 zugewandten Längsseite weist die Zahnleiste 54 eine Verzahnung 54b auf. Das Auslöseteil 28 ist mit einem zur Zahnleiste 54 hin gerichteten, seitlichen Angriffsarm 28a versehen, dessen freies Ende mit einem Kupplungszahn 28b endet. Dieser Kupplungszahn 28b ist zum Eingriff zwischen zwei Zähne der Verzahnung 54b der Zahnleiste 54 bestimmt. Bei der in den Fig. 4 und 5 gezeigten Ruhestellung des Gurtschlosses 10 befindet sich jedoch der Kupplungszahn 28b gegenüber dem Betätigungsarm 54a und kann daher nicht mit der Verzahnung 54b in Eingriff gelangen. Das Betätigungselement 12 ist mit einem Druckansatz 12a versehen, der mit dem Angriffsarm 28a des Auslöseteils 28 in Eingriff kommt, sobald die das Betätigungselement 12 bildende Drucktaste niedergedrückt wird. Solange sich das Gurtschloß 10 in seiner Ruhestellung befindet, erfolgt eine Betätigung des Auslöseteils 28 also unmittelbar über das Betätigungselement 12. Fig. 5 zeigt den Zustand bei niedergedrücktem Betätigungselement 12.

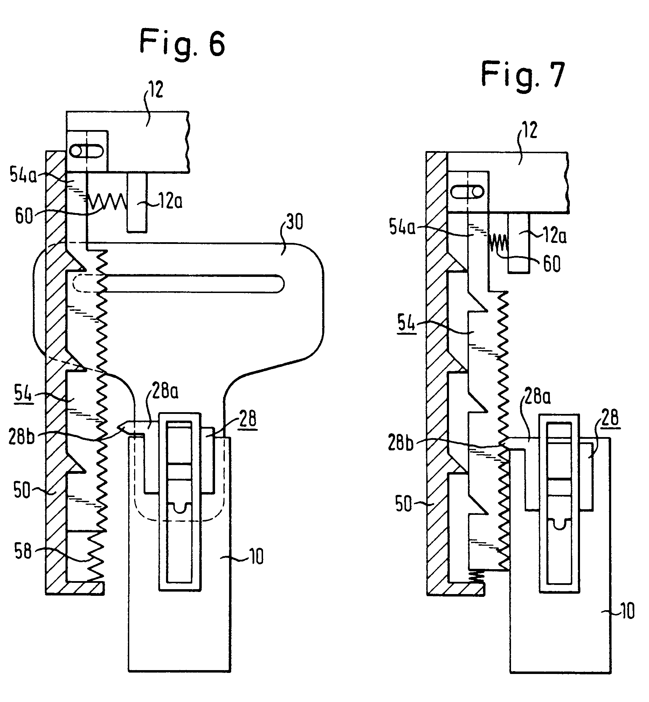

Wenn hingegen durch eine Aktivierung des (nicht gezeigten) Gurtstraffers das Gurtschloß 10 in Richtung zum Fahrzeugboden hin verlagert wurde, wie in den Fig. 6 und 7 gezeigt, befindet sich der Druckansatz 12a des Betätigungselementes 12 im Abstand von dem Angriffsarm 28a des Auslöseteils 28. Der Kupplungszahn 28b liegt jedoch der Verzahnung 54b der Zahnleiste 54 gegenüber. Beim Niederdrücken des Betätigungselementes 12 wird auch die Zahnleiste 54 über den Betätigungsarm 54a niedergedrückt. Die Rampenelemente 52 weisen jedoch die Zahnleiste 54 zugleich in Querrichtung ab, so daß die Zahnleiste 54 eine kombinierte Längs- und Querbewegung ausführt und mit dem Kupplungszahn 28b in Eingriff gelangt. Bei weiterem Niederdrücken des Betätigungselementes 12 wird das Auslöseteil 28 mitgenommen und das Gurtschloß geöffnet; dieser Zustand ist in Fig. 7 gezeigt.

## Patentansprüche

1. Betätigungseinrichtung an einem Gurtschloß (10) einen in einem Fahrzeug vorgesehenen Sicherheitsgurtsystems, mit einem Betätigungselement (12), das an einem Auslöseteil (28) des Gurtschlosses (10) angreift, wobei das Betätigungselement (12) an einer ortsfesten Stelle im Fahrzeug angeordnet und über eine kraftschlüssige Verbindung, die eine Relativbewegung zwischen Gurtschloß (10) und Betätigungselement (12) zuläßt, an das Auslöseteil (28) angeschlossen ist, dadurch gekennzeichnet, daß das Gurtschloß (10) Teil eines Sicherheitsgurtsystems ist, das mit einem am Gurtschloß (10) angreifenden Gurtstraffer versehen ist, durch dessen fahrzeugsensitive Aktivierung das Gurtschloß (10) zur Beseitigung der Gurtlose aus seiner Ruhestellung in Richtung zum Fahrzeugboden verlagert wird, und daß die kraftschlüssige Verbindung eine Bewegungswandlereinrichtung umfaßt, die den Betätigungshub des Betätigungselements (12) in eine kombinierte Schub- und Querbewegung eines Übertragungselements (54) umsetzt, das bei unbetätigtem Betätigungselement (12) von dem Auslöseteil (28) des Gurtschlosses (10) entkoppelt ist und durch die Querbewegung des Übertragungselements (54) bei betätigtem Betätigungselement (12) mit diesem Auslöseteil (28) gekoppelt wird.

2. Betätigungseinrichtung nach Anspruch 1, dadurch gekennzeichnet, daß die Bewegungswandlereinrichtung eine parallel zur Verlagerungsrichtung des Gurtschlosses (10) ortsfest angeordnete Führungsschiene (50) aufweist, die mit Rampenelementen (52) versehen ist und an der eine mit den Rampenelementen entsprechenden Ausnehmungen (56) versehene, das Übertragungselement bildende Zahnleiste (54) längsverschiebbar und quer zur Längsrichtung beweglich geführt ist, daß das Betätigungselement (12) mit der Zahnleiste (54) gekoppelt ist und daß das Auslöseteil (28) mit wenigstens einem Kupplungszahn (28b) versehen ist, der durch die Querbewegung der Zahnleiste (54) mit deren Verzahnung (54b) in Eingriff bringbar ist.

3. Betätigungseinrichtung nach Anspruch 2, dadurch gekennzeichnet, daß die Zahnleiste (54) durch Federspannung (58, 60) sowohl in Richtung von dem Auslöseteil (28) fort als auch zu dem Betätigungselement (12) hin belastet ist.

4. Betätigungseinrichtung nach Anspruch 2 oder 3, dadurch gekennzeichnet, daß das Betätigungselement (12) einen Druckansatz (12a) aufweist, der unmittelbar auf das Auslöseteil (28) einwirkt, solange sich das Gurtschloß (10) in seiner Ruhestellung befindet.

5. Betätigungseinrichtung an einem Gurtschloß (10) eines in einem Fahrzeug vorgesehenen Sicherheitsgurtsystems, mit einem Betätigungselement (12), das an einem Auslöseteil (28) des Gurtschlosses (10) angreift, wobei das Betätigungselement (12) an einer ortsfesten Stelle im Fahrzeug angeordnet und über eine durch einen Seilzug gebildete kraftschlüssige Verbindung, die eine Relativbewegung zwischen Gurtschloß (10) und Betätigungselement (12) zuläßt, an das Auslöseteil (28) angeschlossen ist, dadurch gekennzeichnet, daß das Gurtschloß (10) Teil eines Sicherheitsgurtsystems ist, das mit einem am Gurtschloß (10) angreifenden Gurtstraffer versehen ist, durch dessen fahrzeugsensitive Aktivierung das Gurtschloß (10) zur Beseitigung der Gurtlose aus seiner Ruhestellung in Richtung zum Fahrzeugboden verlagert wird, daß der Seilzug durch ein über Umlenkelemente (40, 42, 44) geführtes, in einer geschlossenen Schlaufe gespannt gehaltenes Zugseil (46) gebildet ist, an dessen einem Ende das Auslöseteil (28) angeschlossen und dessen anderes Ende mit dem Gehäuse des Gurtschlosses (10) oder einem starr mit diesem verbundenen Teil verbunden ist, so daß der mit dem Auslöseteil (28) verbundene Abschnitt des Zugseils (46) bei Aktivierung des Gurtstraffers der Bewegung des Auslöseteils (28) gleichsinnig folgt, und daß das Betätigungselement (12) an einem zwischen zwei Umlenkelementen (42, 44) gespannt gehaltenen Abschnitt des Zugseils (46) im Sinne einer Schlaufenbildung zwischen diesen Umlenkelementen (42, 44) angreift.

## Claims

1. An actuating means at a buckle (10) of a a safety belt system for vehicles, comprising an actuating element (12) which engages a release member (28) of the buckle (10), said actuating element (12) being mounted at a stationary location in the vehicle and connected to the release member (28) via a force transmitting connection allowing a relative movement between the buckle (10) and the actuating element (12), characterized in that the buckle (10) is part of a safety belt system provided with a belt tensioner, engaging the buckle (10), the vehicle-sensitive actuation of which displaces the buckle (10) in the direction towards the vehicle floor to eliminate belt slack, and in that the force transmitting connection comprises a movement conversion device which converts the actuating stoke of the actuating element (12) into a combined thrust and transverse movement of a transmission element (54), said transmission element (54) being uncoupled from the release member (28) of the buckle (10) when the actuating element (12) is not actuated and being coupled to said release member (28) by the transverse movement of the transmission element (54) when the actuating element (12) is actuated.

2. An actuating means according to claim 1, characterized in that the movement conversion device comprises a stationary guide rail (50), extending in parallel to the displacement direction of the buckle (10), which comprises ramp elements (52) and at which a rack bar (54) is guided longitudinally displaceably and movably transversely to the longitudinal direction, said guide rail being provided with recesses (56) corresponding to the ramp elements, in that the actuating element (12) is coupled to the rack bar (54) and in that the release member (28) is provided with at least one coupling tooth (28b) which by transverse movement of the rack bar (54) can be brought into engagement with the toothing (54b) of the rack bar.

3. An actuating means according to claim 2, characterized in that the rack bar (54) is biased by spring tension (58, 60) both in the direction away from the release member (28) and towards the actuating element (12).

4. An actuating means according to claim 2 or 3, characterized in that the actuating element (12) comprises a pressure extension (12a) which acts directly on the release member (28) as long as the buckle (10) is in its rest position.

5. An actuating means at a buckle (10) of a safety belt system for vehicles, comprising an actuating element (12) which engages a release member (28) of the buckle (10), said actuating element (12) being mounted at a stationary location in the vehicle and connected to the release member (28) via a force transmitting connection, constituted by a cable pull, allowing a relative movement between the buckle (10) and the actuating element (12), characterized in that the buckle (10) is part of a safety belt system provided with a belt tensioner, engaging the buckle (10), the vehicle-sensitive actuation of which displaces the buckle (10) in the direction towards the vehicle floor to eliminate belt slack, in that the cable pull is formed by a traction cable (46), guided by running over deflecting elements (40, 42, 44) and held tensioned in a closed loop, at the one end of which the release member (28) is connected and the other end of which is connected to the housing of the buckle (10) or a member rigidly connected thereto so that the portion of the traction cable (46) connected to the release member (28) upon activation of the belt tensioner follows the movement of the release member (28) in same direction, and in that the actuating element (12) engages a portion of the traction cable (46) held tensioned between two deflecting elements (42, 44) so that a loop between said deflecting elements (42, 44) is formed.

## Revendications

1. Dispositif d'actionnement d'un verrou de ceinture (10) d'un système de ceinture de sécurité prévu dans un véhicule, comprenant un élément d'actionnement (12) qui attaque un organe (28) de libération du verrou (10) de la ceinture, l'élément d'actionnement (12) étant disposé en un emplacement fixe dans le véhicule et étant relié à l'organe de libération (28) par une liaison de transmission de force qui autorise un mouvement relatif entre le verrou (10) de la ceinture et l'élément d'actionnement (12), caractérisé en ce que le verrou (10) de la ceinture fait partie d'un système de ceinture de sécurité qui est équipé d'un tendeur de ceinture qui attaque le verrou (10) de la ceinture et dont la mise en action en réponse au véhicule déplace le verrou (10) de la ceinture de sa position de repos vers le fond du véhicule pour éliminer le mou de la ceinture, et en ce que la liaison de transmission de force comprend un dispositif de conversion de mouvement qui transforme la course d'actionnement de l'élément d'actionnement (12) en un mouvement combiné de poussée et transversal d'un élément de transmission (54) qui, lorsque l'élément d'actionnement (12) n'est pas actionné, découple l'organe (28) de libération du verrou (10) de la ceinture et que le mouvement transversal de l'élément de transmission (54) accouple à cet organe de libération (28) lorsque l'élément d'actionnement (12) est actionné.

2. Dispositif d'actionnement selon la revendication 1, caractérisé en ce que le dispositif de conversion de mouvement comprend une barre de guidage (50) qui est montée en position fixe parallèlement à la direction de déplacement du verrou (10) de la ceinture, qui comporte des éléments en rampe (52) et contre laquelle une baguette dentée (54) formant l'élément de transmission et comportant des échancrures (56) correspondant aux éléments en rampe est guidée déplaçable longitudinalement et transversalement à la direction de la longueur, en ce que l'élément d'actionnement (12) est accouplé à la baguette dentée (54) et en ce que l'organe de libération (28) comporte au moins une dent d'accouplement (28b) qui peut être mise en prise avec la denture (54b) de la baguette dentée (54) par le mouvement transversal de cette dernière.

3. Dispositif d'actionnement selon la revendication 2, caractérisé en ce que la baguette dentée (54) est sollicité par la tension de ressorts (58, 60) aussi bien dans le sens l'éloignant de l'organe de libération (28) que dans le sens la rapprochant de l'élément d'actionnement (12).

4. Dispositif d'actionnement selon la revendication 2 ou 3, caractérisé en ce que l'élément d'actionnement (12) comporte un talon de poussée (12a) qui agit directement sur l'organe de libération (28) aussi longtemps que le verrou (10) de la ceinture se trouve à sa position de repos.

5. Dispositif d'actionnement d'un verrou de ceinture (10) d'un système de ceinture de sécurité prévu dans un véhicule, comprenant un élément d'actionnement (12) qui attaque un organe (28) de libération du verrou (10) de la ceinture, l'élément d'actionnement (12) étant disposé en un emplacement fixe dans le véhicule et étant relié à l'organe de libération (28) par une liaison de transmission de force formée par un câble de transmission et autorisant un mouvement relatif entre le verrou (10) de la ceinture et l'élément d'actionnement (12), caractérisé en ce que le verrou (10) de la ceinture fait partie d'un système de ceinture de sécurité qui est équipé d'un tendeur de ceinture qui attaque le verrou (10) de la ceinture et dont la mise en action en réponse au véhicule déplace le verrou (10) de la ceinture de sa position de repos vers le fond du véhicule pour éliminer le mou de la ceinture, en ce que le câble de transmission est formé d'un câble de traction (46) maintenu tendu en une boucle fermée, guidé sur des éléments de renvoi (40, 42, 44), à l'une des extrémités duquel l'organe de libération (28) est relié et dont l'autre extrémité est reliée au boîtier du verrou (10) de la ceinture ou à un organe solidarisé avec ce dernier, de manière que la partie du câble de traction (46) qui est reliée à l'organe de libération (28) suive dans le même sens le mouvement de l'organe de libération (28) lors de la mise en action du tendeur de ceinture et en ce que l'élément d'actionnement (12) attaque une partie du câble de traction (46) maintenue tendue entre deux éléments de renvoi (42, 44) dans le sens de la formation d'une boucle entre ces éléments de renvoi (42, 44).
